# EUROPEAN PATENT SPECIFICATION

(11) **EP 1 029 230 B1**
(45) Date of publication and mention of the grant of the patent: **23.01.2002**
(21) Application number: 98951679.4
(22) Date of filing: 30.10.1998
(51) Int. Cl.: G01N 11/12

(54) **INSTRUMENT AND METHOD FOR MEASURING THE VISCOSITY OF A LIQUID**
INSTRUMENT UND METHODE ZUR MESSUNG DER VISKOSITÄT EINER FLÜSSIGKEIT
INSTRUMENT ET PROCEDE POUR MESURER LA VISCOSITE D'UN LIQUIDE

(30) Priority: 03.11.1997 IT FI970244
(43) Date of publication of application: 23.08.2000
(73) Proprietor: DIESSE DIAGNOSTICA SENESE s.r.l., I-20123 Milano (IT)
(72) Inventor: PRATELLESI, Tiziano, I-50018 Scandicci (IT); RICCI, Antonio, I-53035 Monteriggioni (IT)
(74) Representative: Mannucci, Michele
(86) International application number: IT9800305
(87) International publication number: WO9923470

(56) References cited:
- DE-A- 2 946 453
- DE-A- 3 219 706
- GB-A- 1 210 804
- US-A- 4 648 262
- US-A- 5 289 716
- LI K K ET AL: "INSTRUMENT FOR THE REMOTE DETERMINATION OF VISCOSITY AND DENSITY IN HOSTILE ENVIRONMENTS" REVIEW OF SCIENTIFIC INSTRUMENTS, vol. 63, no. 9, 1 September 1992, pages 4192-4195, XP000311679

## Description

The invention relates to the possibility of measuring the viscosity of a liquid, for biological examinations and other purposes, in a particularly simple and rapid way.

One subject of the invention is a method of measurement which is based on the determination of the kinematic parameters of the motion of a gas bubble in the liquid to be examined, particularly a liquid contained in a container having a delimited dimension in the direction along which the bubble moves; the motion takes place under the action of the force of gravity, the fluid pressure and viscoelastic forces, but movement caused by the centrifugal effect may also be provided.

Another subject of the invention is an instrument for measuring the viscosity of a liquid.

DE-A-3219706 discloses a device for comparative observation of the viscosity of various liquids contained in inclined tubes arranged side-by-side in the device. A body or gas bubble in each tube moves along the tube with a rate which is a function of the viscosity of the liquid. Different rates are indicative of different viscosity values for the liquids contained in the different tubes. No viscosity measurement is carried out.

GB-A-1210804 discloses a viscometer including a vertically arranged stationary tubular container where the liquid to be tested is introduced. An air bubble generating nozzle is arranged on the bottom of the container and several optical detectors are arranged at different positions along the axial development of the container. Bubbles of controlled and constant dimensions are generated by the nozzle and move from the bottom to the top of the container. Their speed is calculated by means of the optical detectors and the viscosity of the liquid is calculated from said speed.

The present invention provides for a novel method and device for viscosity measurements which is based on a different principle.

The method according to the invention includes the following steps:
- introducing the liquid in a longitudinally extending container having a delimited dimension in the direction in which the bubble moves,
- sealing said container leaving a gas bubble therein;
- when said container is in a first position, optically determining the level of the liquid in said container;
- oscillating said container from said first position to a second position;
- determining the time required by the bubble to move from a first end to a second end of said container when said container is moved from said first to said second position.

According to the invention, the instrument includes:
- on a base structure, a moving element which can be oscillated about a horizontal axis;
- on said moving element, at least one housing to accommodate a sealable container longitudinally extending orthogonally or inclined with respect to said horizontal axis and movable with said moving element between a first position and a second position about said horizontal axis;
- an optical reading system by transparency through said at least one container, for determining the presence of a gas bubble which reaches the higher end of the container;
- a time measuring instrument;
- a spatial travel measuring system for measuring the spatial travel of the bubble along said container;
- wherein said optical reading system, said time measuring instrument and said spatial travel measuring system determine the level of the liquid in said container when the moving element is in said first position and, when said moving element is moved from said first to said second position, detect the time required by the bubble to move from a first end to a second end of said container.

Essentially, therefore, said instrument comprises, in combination:
- on a base structure, a moving element which can be rotated and/or oscillated into variously inclined positions;
- on said moving element, at least one housing to accommodate a container such as a test tube or equivalent, which can be sealed and whose longitudinal extension is such that it can be oriented variously downward or upward with respect to the axis of oscillation;
- a system of optical reading by transparency through said container or each of said containers for monitoring the position of an air bubble, particularly at the instant at which it reaches the highest end of the container when its inclination has been changed;
- an instrument for measuring the time elapsed between significant events.

Said system or each of said systems of optical reading may be disposed on said moving element. In particular, said system of optical reading may be carried by a cursor which is slidable along the longitudinal extension of the container, and may be associated with a system of measuring the height of the free level of the liquid. A drive system, of the endless screw or similar type, may be provided for said cursor of the system of optical reading. A drive system may also be provided for the oscillation of said moving element carrying the container or containers of the test tube type or similar. A container of the test tube type may be formed advantageously - but not necessarily - with a flattened cross section whose greater dimension is parallel to the horizontal axis of oscillation of said moving element.

The invention will be more clearly understood from the description and the attached drawing, which shows a practical non-restrictive embodiment of the invention. In the drawing,
Fig. 1 shows a side view, in partial section, of an instrument with a single container of the test tube type;
Fig. 2. shows a schematic plan view through II-II in Fig. 1;
Fig. 3 shows a view from the line III-III in Fig. 1, with the oscillating moving element in various positions;
Fig. 4 shows, in a schematic plan view, an embodiment of the instrument having a plurality of containers of the test tube type;
Figs. 5 and 6 show separately a container or test tube in two measuring positions.

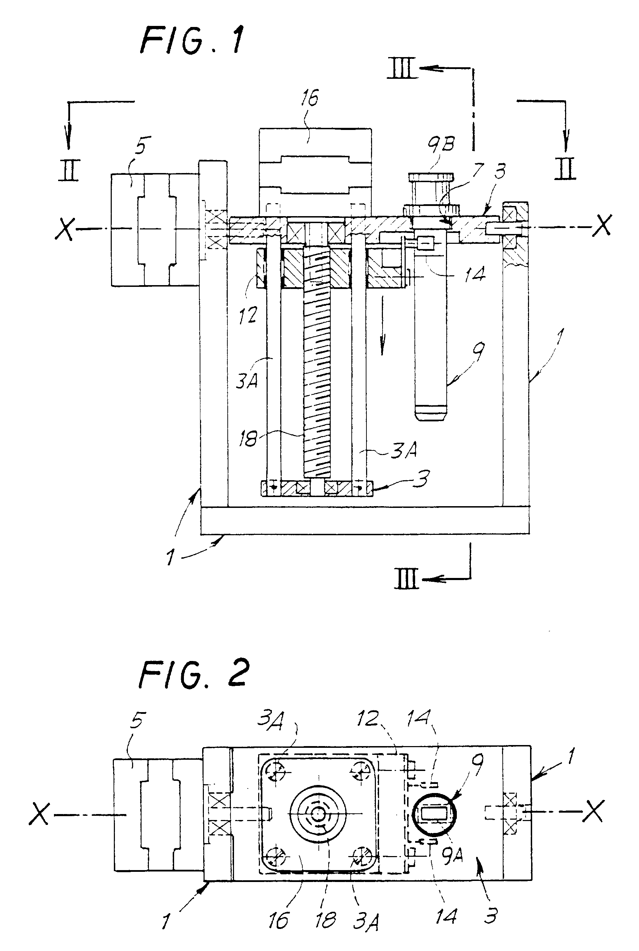

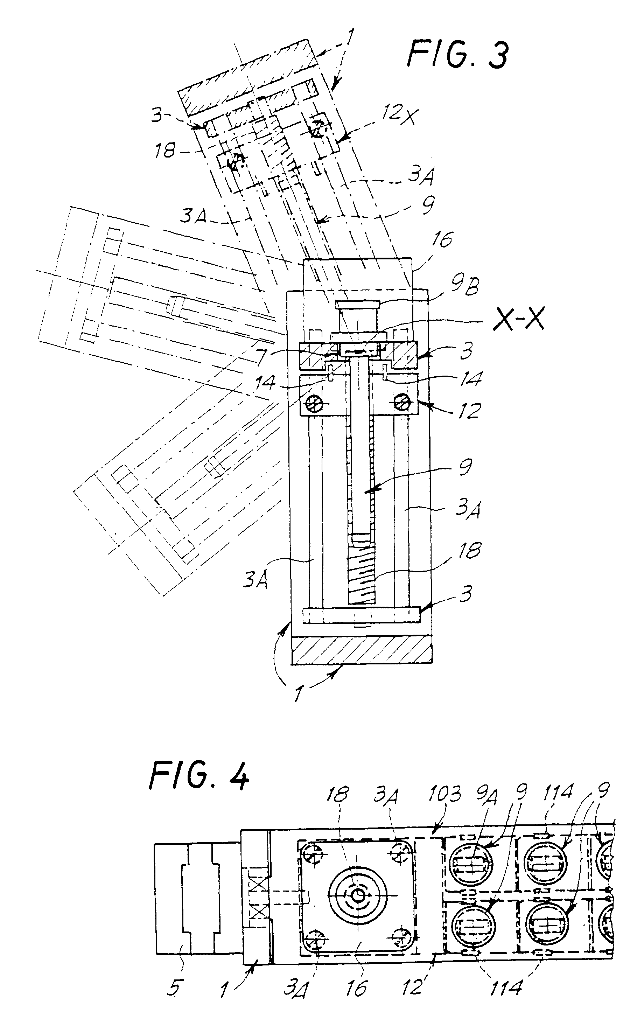

According to the illustrations in the attached drawing, with reference initially to Figs. 1 - 3, the numeral 1 indicates a base structure, which may also be associated with another set of instruments for similar analyses. A moving element 3 is pivoted on said base structure about a horizontal axis X-X and can be rotated and/or oscillated by means of a drive system 5 capable of making the moving element 3 take up one or other of various angular positions. The moving element 3 has a housing 7 capable of accommodating and retaining a container of the test tube type 9, which may be of the same type as those used for other systems of analysis, for example for the determination of the rate of erythrosedimentation, with the cavity of the container usually having a cross section which is advantageously but not necessary rectangular as indicated by 9A; said rectangular section may advantageously be oriented with the greater dimension parallel to the axis X-X, suitable references being provided for the positioning of the test tube in the housing 7. The container 9 may be sealed by a plug 9B. The moving element 3 also comprises guide means 3A extending parallel to the axis of the housing 7 and to the longitudinal extension of the container of the test tube type 9 and consequently with a high inclination with respect to the axis X-X of oscillation of the moving element 3 or actually orthogonal to said axis. A cursor 12 may slide on the guide means 3A and may reach a position 12 close to the axis X-X as shown by the solid lines in Fig. 1, and a position 12X which is more remote from the axis X-X and is indicated by the indicating line in Fig. 3, at the end of the container of the test tube type 9. The cursor 12 carries a pair of interacting sensor elements 14, which are disposed on opposite sides of the container of the test tube type 9 and which form part of the reading system for detecting the position of an air bubble inside the container of the test tube type 9. The cursor 12 can be slid from the position 12 indicated in solid lines in Fig. 1 and closer to the axis X-X, to a position 12X which is more remote from said axis X-X, such as that indicated by an indicating line in Fig. 3.

The movement of the cursor 12 may be imparted by a drive system 16, which drives a threaded shaft 18 which is engaged with a female thread carried by the cursor 12.

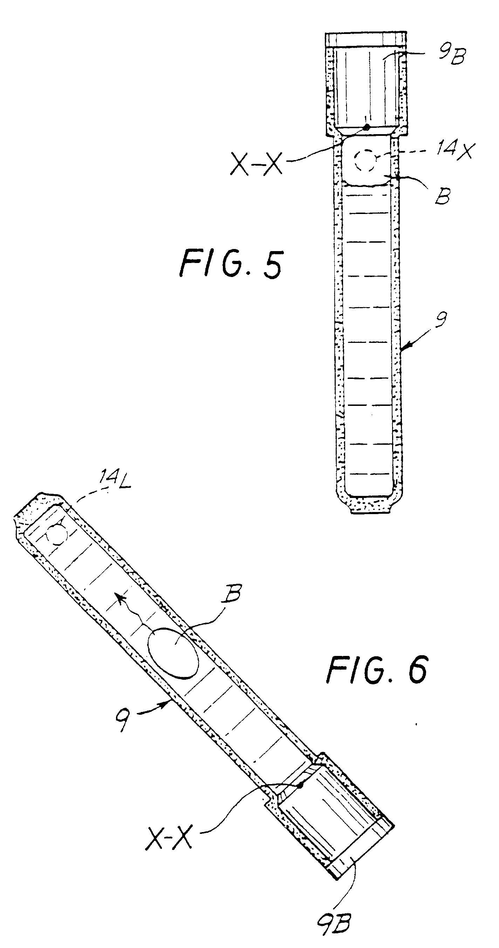

The container of the test tube type 9 is partially filled with the liquid to be examined for determination of the viscosity, and is sealed in such a way that it still has an air bubble inside the container. When the moving element 3 with the container of the test tube type 9 is in the vertical configuration or in any case oriented downward, the height of the liquid inside the container can be read by moving the cursor 12. When the viscosity is to be measured, the sensor 14 is brought, with the two parts which are located on either side of the container of the test tube type, to a position 14L near the bottom of the container of the test tube type 9, by a movement away from the axis of oscillation X-X. The oscillating moving element 3 is then inclined, by means of the drive system 5 or by another appropriate method, to one or another of a plurality of angular positions, pre-selected for measurement by a movement with respect to the starting position shown in Figs. 1 and 3 and in any case such that the test tube is raised with its base oriented upward. The rotation takes place with a specific angular velocity determined by the drive system 5. The initial position of the container of the test tube type is shown in Fig. 5; the sensors 14 may be in the position 14X or already in the position 14L. In the rotated condition of the moving element 3, and therefore with a specific inclination of the container of the test tube type 9, with the end which is moved from the lowest position shown in Figs. 1 and 5 to a position above the level of the axis of oscillation X-X (Fig. 6), there is a movement of the air bubble B along the test tube and through the liquid, over a period which depends on the viscosity of the liquid contained in the test tube, and also on the size of the contained air bubble and on other physical parameters. When the high position is reached (near the base of the test tube 9 which is oriented upward), this is detected by the sensors 14 (located in the position 14L) which are sensitive to the variations of transmission of the signal which passes through the container of the test tube type 9 and the liquid or the gas of the bubble, which is located between the two sensors 14. From a series of parameters - which depend on the inclination imparted to the test tube, on the size of the air bubble, and also, obviously, on the temperature and on the quantity of liquid, on the length of travel of the bubble, on the adhesive forces, on the density of the liquid, and other factors - it is possible to determine the viscosity of the liquid contents of the test tube, as has been discovered and confirmed by comparative tests carried out additionally with other viscometers of known types, but far more complicated than the instrument described above.

An instrument similar to that described may be prepared to carry out a plurality of simultaneous measurements, by providing in the moving element 103, which is suitably shaped as shown in Fig. 4 for example, a plurality of housings for test tubes 9 positioned parallel to each other and by providing corresponding pluralities of pairs of sensor elements 114, to carry out the optical determinations in the individual test tubes.

It is to be understood that the drawing shows only an example provided solely as a practical demonstration of the invention, and that this invention may vary in its forms and dispositions without departing from the scope of the guiding concept of the invention. The presence of any reference numerals in the attached claims has the purpose of facilitating the reading of the claims with reference to the description and to the drawing, and does not limit the scope of protection represented by the claims.

## Claims

1. An instrument for measuring the viscosity of a liquid, including:
- on a base structure (1), a moving element (3) which can be oscillated about a horizontal axis (X-X);
- on said moving element (3), at least one housing (7) to accommodate a sealable container (9) longitudinally extending orthogonally or inclined with respect to said horizontal axis (X-X) and movable with said moving element (3) between a first position and a second position about said horizontal axis (X-X);
- an optical reading system (14) by transparency through said at least one container (9), for determining the presence of a gas bubble which reaches the higher end of the container;
- a time measuring instrument;
- a spatial travel measuring system for measuring the spatial travel of the bubble along said container;
- wherein said optical reading system (14), said time measuring instrument and said spatial travel measuring system determine the level of the liquid in said container when the moving element (3) is in said first position and, when said moving element (3) is moved from said first to said second position, detect the time required by the bubble to move from a first end to a second end of said container (9).

2. The instrument as claimed in claim 1, **characterized in that** said optical reading system (14) is disposed on said moving element (3).

3. The instrument as claimed in claim 2, **characterized in that** said optical reading system (14) is carried by a cursor (12) which is slidable along the longitudinal extension of the container (9).

4. The instrument as claimed at least in claim 3, **characterized in that** said cursor is associated with a system of measuring the height of the column of liquid in the container (9).

5. The instrument as claimed in claim 3 or 4, **characterized in that** it comprises a drive system (16, 18) of the endless screw or similar type, for said cursor (12) of the optical reading system.

6. The instrument as claimed in at least one of the preceding claims, **characterized in that** it comprises a drive system (5) for the rotation and/or oscillation of said moving element (3).

7. The instrument as claimed in at least one of the preceding claims, **characterized in that** the container of the test tube type (9) is shaped with a flattened cross section (9A), whose greater dimension is parallel to said horizontal axis (X-X) of oscillation of said moving element (3).

8. A method of measuring the viscosity of a liquid, based on the determination of the kinematic parameters of the motion of a gas bubble in the liquid to be examined, the movement taking place under the action of the force of gravity, the fluid pressure and the viscoelastic forces, said method including the steps of:
- introducing the liquid in a longitudinally extending container having a delimited dimension in the direction in which the bubble moves,
- sealing said container leaving a gas bubble therein;
- when said container is in a first position, optically determining the level of the liquid in said container;
- oscillating said container from said first position to a second position;
- determining the time required by the bubble to move from a first end to a second end of said container when said container is moved from said first to said second position.

9. The method as claimed in claim 8, **characterized in that** a movement caused by the centrifugal effect is also provided.

## Patentansprüche

1. Instrument zum Messen der Viskosität einer Flüssigkeit, mit:
- einem beweglichen Element (3), das um eine Horizontalachse (X X) schwingen kann, auf einer Basisstruktur (1) ;
- wenigstens einem Gehäuse (7) auf dem beweglichen Element (3) zur Aufnahme eines abdichtbaren Behälters (9), der sich in Längsrichtung rechtwinkelig oder im Winkel zu der Horizontalachse (X-X) erstreckt und mit dem beweglichen Element (3) zwischen einer ersten Position und einer zweiten Position um die Horizontalachse (X-X) bewegbar ist;
- einem optischen Lesesystem (14) mittels Transparenz durch wenigstens einen Behälter (9), um die Anwesenheit von Gasblasen, welche das höhere Ende des Behälters erreichen, zu bestimmen;
- einem Zeitmeßinstrument;
- einem Raumwegmeßinstrument zum Messen des Raumweges der Blase entlang des Behälters;
- wobei das optische Lesesystem (14), das Zeitmeßinstrument und das Raumwegmeßsystem den Pegel der Flüssigkeit in dem Behälter bestimmen, wenn das bewegliche Element (3) in der ersten Position ist, und wenn das bewegliche Element (3) von der ersten Position in die zweite Position bewegt wird, diejenige Zeit detektiert wird, die die Blase braucht, um sich vom ersten Ende zu einem zweiten Ende des Behälters (9) zu bewegen.

2. Instrument nach Anspruch 1, **dadurch gekennzeichnet, daß** das optische Lesesystem (14) auf dem beweglichen Element (3) angeordnet ist.

3. Instrument nach Anspruch 2, **dadurch gekennzeichnet, daß** das optische Lesesystem (14) durch einen Gleitzeiger (12) getragen ist, der entlang der Längserstreckung des Behälters (9) verschiebbar ist.

4. Instrument nach wenigstens Anspruch 3, **dadurch gekennzeichnet, daß** der Gleitzeiger einem System zum Messen der Höhe der Flüssigkeltssäule im Behälter (9) zugeordnet ist.

5. Instrument nach Anspruch 3 oder 4, **gekennzeichnet durch** ein Antriebsystem (16, 18) mit einer Endlosschraube oder von einem ähnlichen Typ, für den Gleitzeiger (12) des optischen Lesesystems.

6. Instrument nach wenigstens einem der vorstehenden Ansprüche, **gekennzeichnet durch** ein Antriebsystem (5) für die Rotation und/oder Schwingung des beweglichen Elementes (3).

7. Instrument nach wenigstens einem der vorstehenden Ansprüche, **dadurch gekennzeichnet, daß** der Behälter vom Probenröhrchen - Typ (9) mit einem abgeflachten Querschnitt (9A) versehen ist, dessen größere Abmessung parallel zur Horizontalachse (X-X) der Schwingung des beweglichen Elementes (3) liegt.

8. Verfahren zum Messen der Viskosität einer Flüssigkeit, basierend auf der Bestimmung der kinematischen Parameter der Bewegung einer Gasblase in der zu untersuchenden Flüssigkeit, wobei die Bewegung unter Wirkung der Gravitationskraft, des Fluiddruckes und der viskoelastischen Kräfte stattfindet, wobei das Verfahren die Schritte aufweist:
- Einleiten der Flüssigkeit in einen sich in Längsrichtung sich erstreckenden Behälter, der in derjenigen Richtung, in welche sich die Blase bewegt, eine begrenzte Abmessung hat,
- Abdichten des Behälters unter Belassung einer Gasblase in demselben;
- optisches Bestimmen des Flüssigkeitspegels in dem Behälter, wenn der Behälter in einer ersten Position ist;
- Schwenken des Behälters von der ersten Position in eine zweite Position;
- Bestimmen derjenigen Zeit, die die Blase benötigt, um von einem ersten Ende zu einem zweiten Ende des Behälters zu wandern, wenn der Behälter von der ersten Position in die zweite Position bewegt worden ist.

9. Verfahren nach Anspruch 8, **dadurch gekennzeichnet, daß** auch eine Bewegung, die durch die Zentrifugalwirkung verursacht wird, vorgesehen ist.

## Revendications

1. Un instrument pour mesurer la viscosité d'un liquide comprenant :
- sur une structure de base (1), un élément mobile (3) qui peut osciller autour d'un axe horizontal (X-X) ;
- sur ledit élément mobile (3) au moins un logement (7) pour recevoir un récipient apte à être étanchéifié (9) se prolongeant longitudinalement or thogonalement ou incliné par rapport audit axe horizontal (X-X) et apte à être déplacé avec ledit élément mobile (3) entre une première position et une deuxième position autour dudit axe horizontal (X-X) ;
- un système de lecture optique (14) par transparence au travers au moins dudit récipient (9) pour déterminer la présence d'une bulle de gaz qui atteint l'extrémité supérieure du récipient ;
- un instrument de mesure du temps ;
- un système de mesure du déplacement spatial pour mesurer le déplacement spatial de la bulle le long dudit récipient ;
- dans lequel ledit système de lecture optique (14), ledit instrument de mesure du temps et ledit système de mesure du déplacement spatial déterminent le niveau du liquide dans ledit récipient lorsque l'élément mobile (3) est dans ladite première position et lorsque ledit élément mobile (3) est déplacé de ladite première position vers ladite deuxième position, détectent la durée nécessaire pour que la bulle se déplace d'une première extrémité vers une deuxième extrémité dudit récipient (9).

2. L'instrument selon la revendication 1, **caractérisé en ce que** ledit système de lecture optique (14) est disposé sur ledit élément mobile (3).

3. L'instrument selon la revendication 2, **caractérisé en ce que** ledit système de lecture optique (14) est porté par un curseur (12) qui est apte à coulisser le long du prolongement longitudinal du récipient (9).

4. L'instrument selon au moins la revendication 3, **caractérisé en ce que** ledit curseur est associé à un système de mesure de la hauteur de la colonne de liquide dans le récipient (9).

5. L'instrument selon la revendication 3 ou 4, **caractérisé en ce qu'**il comprend un système d'entraînement (16, 18) de la vis sans fin ou d'un type similaire pour ledit curseur (12) du système de lecture optique.

6. L'instrument selon au moins l'une des revendications précédentes, **caractérisé en ce qu'**il comprend un système d'entraînement (5) pour la rotation et/ou l'oscillation dudit élément mobile (3).

7. L'instrument selon au moins l'une des revendications précédentes, **caractérisé en ce que** le récipient du type éprouvette (9) est conformé avec une section transversale aplatie (9A), dont la dimension la plus grande est parallèle audit axe horizontal (X-X) d'oscillation dudit élément mobile (3).

8. Procédé pour mesurer la viscosité d'un liquide basé sur la détermination des paramètres cinématiques du mouvement d'une bulle de gaz dans le liquide à examiner, le mouvement ayant lieu sous l'action de la force de gravité, de la pression du fluide et des forces viscoélastiques, ledit procédé comprenant les étapes consistant à :
- introduire le liquide dans un récipient se prolongeant longitudinalement ayant une dimension délimitée dans la direction dans laquelle la bulle se déplace,
- étanchéifier ledit récipient en laissant une bulle de gaz dans celui-ci ;
- lorsque ledit récipient est dans une première position, déterminer optiquement le niveau du liquide dans ledit récipient ;
- faire osciller ledit récipient depuis ladite première position vers une seconde position ;
- déterminer la durée nécessaire par la bulle pour qu'elle se déplace d'une première extrémité vers une deuxième extrémité dudit récipient lorsque ledit récipient est déplacé de ladite première position vers ladite deuxième position.

9. Le procédé selon la revendication 8, **caractérisé en ce que** l'on prévoit aussi un mouvement provoqué par l'effet centrifuge.
